# FASCICULE DE BREVET EUROPEEN

(11) **EP 0 425 333 B1**
(45) Date de publication et mention de la délivrance du brevet: **17.03.1993**
(21) Numéro de dépôt: 90402803.2
(22) Date de dépôt: 09.10.1990
(51) Int. Cl.: G01T 1/164

(54) **Dispositif de localisation en temps réel de sources de rayonnement**
Gerät zur Echtzeitlokalisierung der Bestrahlungsquelle
Device for localizing the radiation source in real time

(30) Priorité: 11.10.1989 FR 8913281
(43) Date de publication de la demande: 02.05.1991
(73) Titulaire: COMMISSARIAT A L'ENERGIE ATOMIQUE, 75015 Paris (FR)
(72) Inventeur: Simonet, Geneviève, F-91300 Massy (FR)
(74) Mandataire: Mongrédien, André

(56) Documents cités:
- EP-A- 0 188 973
- US-A- 4 471 378
- IEEE TRANSACTIONS ON NUCLEAR SCIENCE, vol. 28, no. 1, février 1981, pages 852-856, New York, US; K. KALATA: "A computer controlled television detector for light, X-rays and particles"

## Description

La présente invention concerne un dispositif de localisation en temps réel de sources de rayonnement. Elle s'applique notamment à la localisation de sources de rayonnement susceptibles d'être contenues dans un local tel qu'une cellule à haute activité par exemple, ou présentes accidentellement dans un local.

L'invention est un perfectionnement du dispositif décrit dans la demande de brevet français n°8500088 du 4 janvier 1985 (voir également le brevet US-A-4797701).

Le dispositif décrit dans la demande mentionnée ci-dessus utilise, pour la localisation de sources de rayonnement, une chambre à sténopé dans laquelle sont placés un film sensible au rayonnement et un film sensible à la lumière visible de la zone dans laquelle sont susceptibles de se trouver les sources de rayonnement ; l'obturateur, dont l'ouverture permet la prise de vue en lumière visible, est transparent au rayonnement des sources.

Après développement de ces films et superposition de ces derniers, on peut localiser les sources de rayonnement dans leur environnement.

Le dispositif décrit dans la demande mentionnée ci-dessus présente l'inconvénient de ne pas permettre la localisation des sources de rayonnement en temps réel ; il oblige donc à travailler en aveugle quant aux sources détectées et à la durée de prise de vue nécessaire et il nécessite un délai de développement avant d'obtenir les résultats.

De plus, pour obtenir une seconde prise de vue, il nécessite une extraction de l'appareil de la zone de travail, et un rechargement des films. Ceci peut demander un délai important, notamment pour obtenir une vue stéréoscopique des sources.

Par ailleurs, sans vue stéréoscopique des sources, il peut dans certains cas y avoir ambiguité sur leurs positions : sont-elles devant ou derrière tel objet visible, et à quelle distance de celui-ci? La quantification du niveau de ces sources que l'on étudie peut être impossible à déterminer car on en connait seulement la direction et le rayonnement à la place de l'appareil de mesure sans en connaître l'exacte position.

La présente invention a pour but de remédier à ces inconvénients.

A cet effet, la présente invention utilise, non plus deux films, mais un écran luminescent qui convertit le rayonnement des sources en un rayonnement lumineux et qui est transparent à la lumière de la zone observée, ainsi qu'une caméra qui est optiquement couplée à l'écran et qui permet d'obtenir, sous forme de signaux électriques, une image de la zone et une image des sources.

De façon précise, la présente invention a pour objet un dispositif de localisation de sources de rayonnement, susceptibles de se trouver dans une zone, ce dispositif comprenant une chambre à sténopé, dont les parois forment un blindage vis-à-vis du rayonnement des sources, et des moyens d'obturation de la chambre à sténopé, ces moyens d'obturation étant transparents au rayonnement des sources, dispositif caractérisé en ce qu'il comprend en outre dans la chambre à sténopé, en regard de ce sténopé, un écran luminescent, transparent dans le domaine lumineux et apte à convertir le rayonnement des sources en un rayonnement lumineux, en ce que les moyens d'obturation sont en outre aptes à empêcher la lumière de la zone d'atteindre l'écran, et en ce que le dispositif comprend aussi une caméra qui est optiquement couplée à l'écran et qui est apte à fournir, sous forme de signaux électriques, une image des sources, grâce au rayonnement lumineux qu'elle reçoit de l'écran, et une image de la zone, grâce à la lumière qu'elle reçoit de cette zone à travers l'écran lorsque les moyens d'obturation sont ouverts, la sensibilité de la caméra étant suffisante pour que l'on obtienne une image acceptable des sources, pour une efficacité donnée de l'écran quant à la détection du rayonnement, les images étant superposables et visibles grâce à des moyens de traitement et de visualisation des signaux électriques.

Selon un premier mode de réalisation particulier du dispositif objet de l'invention, la caméra est placée dans la chambre à sténopé et comporte une fenêtre d'entrée qui est placée contre l'écran.

Selon un deuxième mode de réalisation particulier, la caméra est placée en dehors de la chambre à sténopé, et optiquement couplée à l'écran par l'intermédiaire d'un faisceau de fibres optiques dont une extrémité est placée dans la chambre à sténopé, contre l'écran.

Dans une réalisation particulière de l'invention, la chambre à sténopé comporte un collimateur délimité par une paroi en forme de cône dont la partie la plus étroite constitue le sténopé.

La chambre à sténopé peut comporter un collimateur délimité par une paroi en forme de double cône formé de deux cônes de même ouverture, opposés par le sommet, ce dernier constituant le sténopé.

Le sténopé peut constituer un double diaphragme, à savoir un petit diaphragme permettant le passage de rayonnement radioactifs et de la lumière et un grand diaphragme permettant seulement le passage des rayonnements radioactifs.

La caméra est de préférence une caméra de type à transfert de charges, à double étage d'intensification.

Une telle caméra est particulièrement appropriée à la présente invention. En effet, un écran luminescent, qui est en outre transparent dans le domaine visible, est généralement peu efficace vis-à-vis d'un rayonnement tel que le rayonnement gamma, ce qui nécessite de lui associer une caméra très sensible.

Le dispositif objet de la présente invention peut comprendre en outre des moyens d'atténuation escamotables, ces moyens d'atténuation étant prévus pour atténuer le rayonnement des sources avant que celui-ci n'atteigne l'écran.

Ces moyens d'atténuation permettent de déterminer l'énergie du rayonnement d'une source que l'on a localisée, par comparaison de l'image de la source (relative au rayonnement émis par celle-ci) lorsque les moyens d'atténuation sont escamotés et de l'image de la source lorsque les moyens d'atténuation ne sont pas escamotés.

Le dispositif objet de l'invention peut aussi comprendre un télémètre orientable, disposé à proximité de la chambre à sténopé et apte à déterminer la distance de chaque source de rayonnement au dispositif.

Il peut alors comprendre en outre une source de lumière orientable, solidaire du télémètre et prévue pour éclairer chaque source de rayonnement dont le télémètre doit mesurer la distance ; de préférence, la lumière correspondante appartient au domaine de sensibilité de la caméra.

Dans une réalisation particulièrement intéressante, on utilise un télémètre comportant un laser, jouant simultanément le rôle de source de lumière d'éclairage. Les informations de distance de chaque source de rayonnement au dispositif sont utilisées pour déterminer l'activité de ces sources.

Enfin, dans une réalisation particulière du dispositif objet de l'invention, ce dispositif est porté par un support mobile dont la position est complètement connue à chaque instant et qui permet de prendre des vues complémentaires soit symétriques, soit éloignées ou rapprochées de façon précise et les moyens de traitement et de visualisation sont prévus pour permettre une vision stéréoscopique, le calcul de la distance des sources par rapport au plan de prise de vues et le calcul de l'intensité du rayonnement au contact des sources.

Le rayonnement des sources peut être un rayonnement gamma.

La présente invention sera mieux comprise à la lecture de la description suivante, d'exemples de réalisation donnés à titre purement indicatif et nullement limitatif, en référence aux dessins annexés sur lesquels :
- la figure 1 est une vue schématique d'un mode de réalisation particulier du dispositif objet de l'invention, comportant une caméra placée dans la chambre à sténopé,
- la figure 2 est une vue schématique d'un autre mode de réalisation particulier du dispositif objet de l'invention, comportant une caméra placée en dehors de la chambre à sténopé, et
- la figure 3 représente schématiquement un support mobile destiné à porter un dispositif conforme à l'invention.

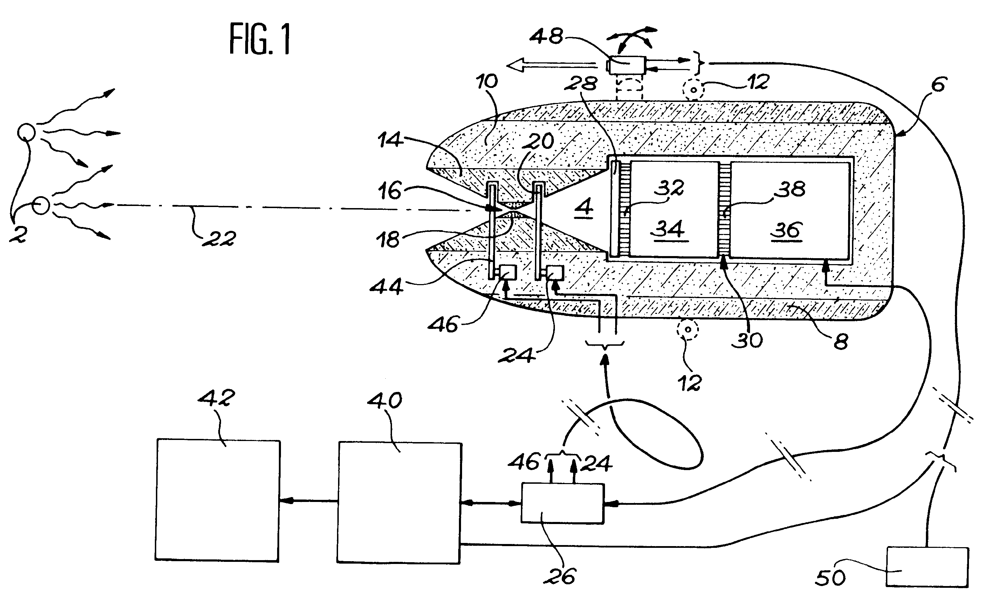

Le dispositif conforme à l'invention, qui est schématiquement représenté sur la figure 1, est par exemple destiné à localiser des sources 2 de rayonnement gamma qui sont susceptibles de se trouver dans une zone telle qu'un local.

Comme dans la demande qui est mentionnée plus haut et à laquelle on se référera, le dispositif représenté sur la figure 1 comprend une chambre 4 à sténopé, formée dans un corps 6 qui constitue un blindage de la chambre 4 vis-à-vis du rayonnement gamma. Ce corps 6 peut être fait d'un alliage approprié à base de tungstène, tel que l'alliage connu sous le nom "DENAL". La densité élevée de cet alliage lui confère un bon pouvoir d'atténuation des rayonnements ; l'utilisation de ce matériau permet donc de réduire l'épaisseur du blindage et, par voie de conséquence, l'encombrement du dispositif et son poids.

Le corps 6 peut comporter une partie périphérique 8 amovible, dans laquelle est insérée le reste 10 du corps, ce qui permet de choisir un blindage périphérique 8 de plus ou moins grande épaisseur suivant que l'activité des sources 2 environnantes est plus ou moins importante.

On voit également sur la figure 1 des moyens portant la référence 12, qui symbolisent un support orientable du corps 6 et donc du dispositif.

Le reste 10 du corps 6 comporte un collimateur 14 en regard de la chambre 4. La paroi du collimateur 14 est constituée de deux cônes de même angle d'ouverture, opposés par leur sommet commun qui est percé pour former le sténopé 16.

Comme dans la demande mentionnée plus haut, le collimateur 14 peut comporter, au niveau et autour du sténopé 16, une partie 18 opaque à la lumière (visible) qui provient de la zone examinée mais perméable au rayonnement gamma, pour tenir compte d'une éventuelle insuffisance d'activité des sources 2 de rayonnement gamma que l'on veut localiser (sténopé à double diaphragme).

De plus, le collimateur 14 peut être interchangeable, ce qui permet de choisir un collimateur à simple ou double diaphragme, d'ouverture adaptée à l'activité supposée des sources gamma 2 que l'on veut localiser.

Le dispositif comprend en outre un obturateur mécanique 20 prévu pour empêcher la lumière visible de la zone de pénétrer dans la chambre 4, tout en laissant passer le rayonnement gamma. Cet obturateur 20 est un iris de type appareil photo, ou, par exemple, une plaque métallique qui est perpendiculaire à l'axe 22 du corps 6, située à proximité du sténopé 16, du côté de la chambre 4, et escamotable. Les mouvements de la plaque formant l'obturateur 20 sont télécommandés par des moyens électromécaniques 24 qui sont eux-mêmes commandés par un boîtier de télécommande 26. Ce dernier peut être placé à grande distance du dispositif si l'activité des sources est importante.

Le dispositif comprend aussi, dans la chambre 4, en regard du sténopé 16, un écran luminescent 28 qui repose contre un épaulement circulaire interne du corps 6, au niveau de la base de la paroi conique du collimateur 14, paroi qui va en s'évasant vers la chambre 4.

L'écran luminescent 28 est transparent dans le domaine visible et apte à convertir le rayonnement gamma des sources 2, qui lui parvient à travers le collimateur 14, en un rayonnement visible par une caméra 30 que le dispositif comprend en outre, dans la chambre 4, et qui est prévue pour fournir, sous forme de signaux électriques, une image de la scène que cette caméra observe à travers le sténopé 16 (lorsque l'obturateur 20 est ouvert). La fenêtre d'entrée 32 de la caméra 30 est plaquée contre l'écran 28, ce dernier étant ainsi placé entre le sténopé 16 et la caméra 30.

L'écran 28 permet de détecter les photons gamma émis par chaque source 2 observée. L'interaction des photons gamma avec l'écran donne lieu à une émission de lumière visible qui tombe normalement sur la fenêtre d'entrée de la caméra. L'intensité de cette lumière visible dépend bien entendu de l'activité de la source et de la distance de celle-ci au dispositif mais également de l'efficacité de l'écran luminescent 28 vis-à-vis du rayonnement gamma.

Afin d'avoir une grande probabilité d'interaction entre les photons gamma et le matériau scintillateur dont est constitué l'écran, ce matériau est de préférence dense et a un bon rendement lumineux. De plus, il est préférable que l'écran soit mince (quelques mm d'épaisseur) pour que l'on ait une bonne résolution spatiale.

De préférence, la caméra 30 est très sensible pour permettre l'utilisation d'un écran mince, fait d'un matériau scintillateur transparent dans le domaine visible, et a une bonne sensibilité de détection du rayonnement gamma à distance. Il est également préférable que la caméra 30 ait une bonne tenue en ambiance gamma et une bonne fiabilité, permettant des mesures quantitatives.

Le choix du matériau de l'écran dépend de l'activité des sources à localiser. Si l'activité est très faible, on peut utiliser un écran en NaI ; si elle n'est pas trop forte, on peut utiliser un écran en germanate de bismuth (BGO) et si elle est forte, on peut utiliser un écran en matière plastique scintillante, suffisant pour la détection de rayonnements X, bêta, ....

C'est ainsi qu'en 10 secondes, avec un écran en BGO de 3 mm d'épaisseur, on peut obtenir l'image d'une source de rayonnement gamma de ⁶⁰Co de 2 Ci, placée à 3 m du dispositif avec une caméra du type à transfert de charges (CCD), à double étage d'intensification.

A titre purement indicatif et nullement limitatif, on utilise une caméra 30 du genre de celle qui est commercialisée par la société LHESA, dont la sensibilité est de 10⁻⁷ lux et qui comprend une fenêtre d'entrée 32 comportant des tronçons de fibres optiques, cette fenêtre étant suivie par un intensificateur d'image de première génération 34 qui est lui-même suivi par une caméra à transfert de charges LH 5038 qui porte la référence 36 sur la figure 1. Des moyens de couplage à tronçons de fibres optiques 38 relient la caméra 36 à l'intensificateur 34.

Une telle caméra 30, contituée par les éléments 32 à 38 et protégée des rayonnements gamma par le blindage que constitue le corps 6, est suffisamment petite pour que le dispositif blindé dans lequel elle se trouve soit portable et puisse être introduit dans les ouvertures classiques ("canaux") des cellules de haute activité (ouvertures de passage de télémanipulateur de 170 mm de diamètre par exemple).

Le boîtier 26 est également prévu pour commander la caméra 30 et notamment pour remettre à zéro le gain de cette caméra lorsque l'obturateur 20 s'ouvre, compte tenu de la grande sensibilité de la caméra (cette remise à zéro pouvant aussi être assurée par une sécurité automatique).

Le dispositif représenté sur la figure 1 est associé à des moyens 40 d'acquisition en temps réel, de traitement et de visualisation des signaux électriques fournis par la caméra 30. Ces moyens 40 d'acquisition, de traitement et de visualisation sont par exemple du genre de ceux qui sont commercialisés par la société ICAP sous le nom VISICAP.

On peut leur associer des moyens 42 de recopie de l'écran qu'ils comportent à des fins d'archivage des images visualisées ; de tels documents sont utilisables sur chantier, dans la présentation de rapports ....

Lorsque l'obturateur 20 est fermé, on obtient au bout d'un certain temps (quelques secondes, par exemple 10 s) l'image des sources de rayonnement gamma. Cette image est stockée dans une première zone de mémoire des moyens 40.

Ensuite, en commandant l'ouverture de l'obturateur 20 pendant une fraction de seconde, on obtient, de façon quasi-instantanée, une image (en lumière visible) de la zone observée, dans laquelle sont les sources 2. Cette seconde image est également stockée dans une seconde zone de mémoire des moyens 40, distincte de la première zone de mémoire.

Après traitement des images et notamment coloration des "taches" dues à l'activité des sources 2 afin de bien repérer ces sources et distinguer leur "luminosité gamma" de la luminosité (en lumière visible) d'objets qui sont présents dans la zone observée mais n'émettent aucun rayonnement gamma, la première et la seconde images sont affichées superposées sur l'écran des moyens 40, ce qui permet le repérage des sources de rayonnement gamma.

Le dispositif représenté sur la figure 1 peut comporter en outre des moyens escamotables 44 d'atténuation des rayonnements gamma avant que ceux-ci n'atteignent l'écran 28. Les moyens 44 sont par exemple constitués par un écran en tungstène dont l'épaisseur peut être de l'ordre de 1 à 3 mm et qui est perpendiculaire à l'axe 22 du dispositif et placé à proximité du sténopé 16, du côté du cône du collimateur 14, cône qui est ouvert vers l'extérieur du dispositif.

L'écran en tungstène et la plaque 20 peuvent être mobiles dans un logement approprié, ménagé dans le corps 6, ou disposés à l'entrée du collimateur.

Des moyens électromécaniques 46 sont prévus dans le corps 6 pour commander l'escamotage et la mise en place de l'écran 44. Ces moyens 46 sont eux-mêmes commandés à partir du boîtier 26 prévu à cet effet.

L'écran 44 permet d'évaluer l'énergie des photons gamma par transmission, l'intensité de la tache, relative à une source de rayonnement gamma, sur l'image des sources, étant plus faible lorsque l'écran 44 en tungstène obture le collimateur 14 que lorsqu'il est escamoté, et ceci, d'autant plus que l'énergie du rayonnement est faible.

On peut également utiliser le dispositif lorsqu'on souhaite faire des mesures d'activité des sources 2. Pour faciliter et automatiser ce calcul, on munit le dispositif d'un télémètre laser 48 orientable, dont l'orientation est télécommandée au moyen d'un boîtier 50 prévu à cet effet. Un tel télémètre est commercialisé par la société ARIES.

Le télémètre laser 48 est utilisé pour mesurer la distance de chaque source au dispositif. Sa zone émettrice est disposée par exemple dans le même plan que l'écran luminescent 28, ce dernier étant également choisi de façon à pouvoir convertir en un rayonnement visible par la caméra, le rayonnement qui est émis par le laser et qui se réfléchit sur les divers objets présents dans la zone et notamment les sources 2 (barreaux métalliques radioactifs par exemple).

C'est ainsi qu'un écran en BGO est sensible à un faisceau laser infrarouge.

Les sources 2 étant localisées grâce au dispositif et visualisées grâce aux moyens 40, on règle le gain de la caméra 30 à un niveau très faible et on déplace le faisceau du laser du télémètre 48 jusqu'à ce que ce faisceau tombe sur l'une des sources dont on veut calculer l'activité (l'activité reçue variant en fonction inverse du carré de la distance à laquelle on se trouve de la source), le déplacement du faisceau réfléchi étant suivi sur l'écran des moyens 40.

L'ensemble VISICAP, muni d'une carte spéciale et relié au télémètre laser, fournit alors la distance cherchée et l'on peut alors déterminer l'activité de la source.

A cet effet, on réalise au préalable un étalonnage avec des sources-étalons dont on connaît l'activité et dont on mesure l'intensité lue par la caméra à une distance donnée et pour un réglage donné.

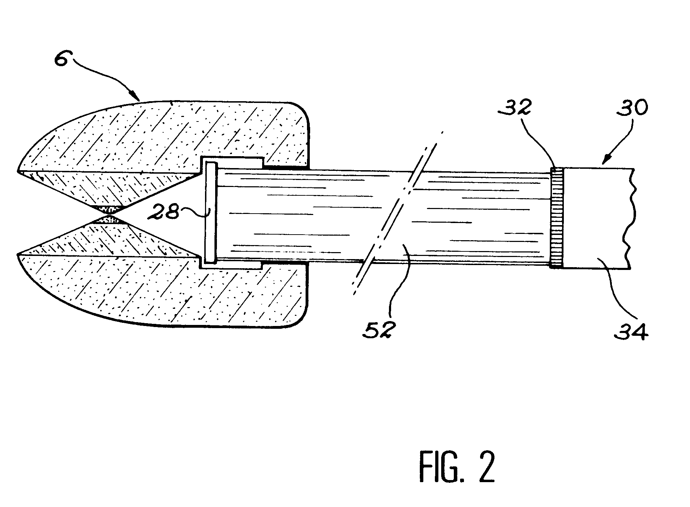

Le dispositif conforme à l'invention, qui est schématiquement et partiellement représenté sur la figure 2, diffère de celui qui est représenté sur la figure 1 par le fait que la caméra 30 n'est plus dans la chambre 4 mais à l'extérieur du corps 6, dont elle peut être très éloignée, ce qui permet de la placer en dehors du local à contrôler, de la cellule à haute activité par exemple. Un faisceau de fibres optiques 52, aptes à conduire le rayonnement visible émis par l'écran et la lumière visible de la zone, relie l'écran 28 à la caméra 30 en traversant le corps 6. Une extrémité du faisceau de fibres aboutit normalement à l'écran et recouvre la surface de celui-ci.

L'autre extrémité du faisceau aboutit normalement à la fenêtre d'entrée 32 de la caméra et recouvre cette fenêtre.

Le dispositif objet de l'invention peut être porté par un support robotisé ou au moins articulé et coulissant, qui peut disposer jusqu'à 6 degrés de liberté de mouvement et dont la position est complètement connue à chaque instant, permettant ainsi de prendre des vues complémentaires, soit symétriques (vues stéréoscopiques), soit éloignées ou rapprochées de façon précise. Les moyens 40 de traitement des signaux sont alors prévus pour permettre la vision stéréoscopique en léger différé sur un ou deux écrans avec des optiques adaptées, portatives ou non, le calcul de la distance des sources par rapport au plan de prises de vues, et enfin un calcul de l'intensité du rayonnement au contact des sources.

Prendre deux vues décalées dans le même plan, de quelques dizaines de centimètres, permet avantageusement de profiter du fait que les sources sont généralement peu mobiles ou à déplacement lent par rapport à l'acquisition de l'image pour disposer de deux images strictement comparables à ceci près qu'elles représentent la scène sous deux angles différents. Cette différence est exploitée par un calculateur et des moyens de visualisation adaptés pour fournir à l'opérateur une vue stéréoscopique de la scène, enlevant toute ambiguité sur la position précise des sources. Un avantage complémentaire est que ce même travail permet d'avoir accès à la distance qui sépare chaque source du dispositif de prise de vue, et cette distance est indispensable pour calculer le rayonnement au contact de la source, calcul qu'on se propose pratiquement toujours de faire.

Prendre deux vues décalées l'une par rapport à l'autre, mais l'une plus rapprochée des sources et l'autre plus éloignée, permet avantageusement par un traitement approprié des images et de l'intensité de chaque pixel, en tenant compte du fait qu'une source ponctuelle voit son rayonnement s'atténuer comme l'inverse du carré de la distance, de remonter par un calcul informatique au rayonnement au contact des sources radioactives.

Le fait de disposer d'un tel support permet avantageusement d'avoir accès à l'ensemble de ces informations dans un temps très court, grâce à la facilité, la rapidité, et la précision des mouvements de ce support.

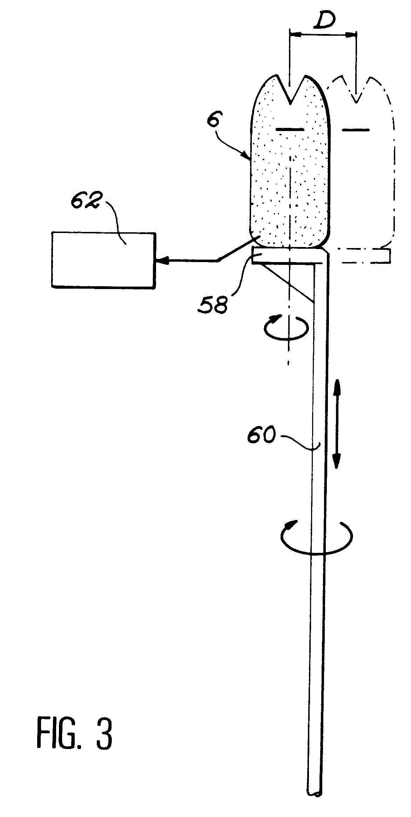

Un dispositif conforme à l'invention, par exemple du genre de celui qui est représenté sur la figure 1, peut être porté par un support 58 articulé et coulissant comme le représente la figure 3 dans une forme privilégiée de l'invention, ce support étant excentré par rapport à son axe principal 60. Une fois la première vue effectuée et mise en mémoire par des moyens 62 du genre des moyens 40 évoqués plus haut, on effectue une seconde vue voisine de la première par exemple : on fait tourner de 180° l'axe principal 60 du support 58 et on reprend une deuxième vue de la scène en image visible et en image radioactive, à une distance D égale à deux fois la longueur du renvoi du support, c'est-à-dire à une distance parfaitement connue. Le traitement de ces images décalées de quelques dizaines de centimètres, puis leur projection sur des écrans cathodiques permet de reconstituer la vue stéréoscopique pour un observateur équipé de lunettes adéquates, par exemple de lunettes à verres polarisés, ou de lunettes binoculaires, ou de lunettes à obturation synchronisée, systèmes déjà connus. ( Le traitement de ces images décalées comprend, pour la deuxième vue, un traitement de rotation du plan-mémoire pour redresser cette vue. En variante, pour ce redressement, on ne fait pas le traitement de rotation mais on fait tourner le dispositif sur le support 58 lorsque celui-ci tourne).

Ainsi l'observateur a une vue stéréoscopique, quoique en léger différé, des sources, et peut les localiser avantageusement de façon évidente sans ambiguité.

Le support 58 peut coulisser pour être approché ou éloigné du plan des sources à observer, pour refaire une autre vue. Le traitement de cette dernière vue comparée à la première, permet, par la différence d'intensité des pixels, de remonter par le calcul informatique au rayonnement au contact des sources.

Enfin les prises de vues stéréoscopiques numérisées peuvent être traitées par ordinateur et permettent de calculer avec précision les distances qui séparent les divers éléments de la scène, du dispositif objet de l'invention, par exemple en s'aidant du déplacement d'un curseur sur l'écran, associé à une "souris", en en "cliquant" sur la "souris" ; cette information aide encore au calcul du rayonnement au contact des sources.

La description précédente concerne la visualisation de sources gamma et met en oeuvre une caméra classique, sensible au rayonnement visible.

L'invention n'est pas limitée à ce cas de figure et englobe notamment la détection de sources X et bêta (à l'aide d'un écran en matière plastique scintillante par exemple, comme on l'a déjà vu en page 8 de la présente description), ainsi que l'utilisation d'une caméra infrarouge enregistrant une image infrarouge de l'environnement.

Outre son application à la recherche de sources radioactives, présentes accidentellement dans un local et qu'il permet de retrouver sans dommage pour les opérateurs, le dispositif de l'invention facilite considérablement les opérations d'intervention dans les cellules à haute activité. Il permet en effet d'identifier les objets actifs indépendants que l'on pourra déplacer, les éléments fixes qu'il faudra blinder ou découper, les zones contaminées qu'il faudra nettoyer. On pourra ainsi protéger le personnel d'intervention et définir la suite à donner au conditionnement des déchets radioactifs.

L'invention s'applique aussi à l'identification des assemblages en matière fissile, non seulement par visualisation (il est d'ailleurs déjà connu d'effectuer une telle visualisation au moyen d'une caméra et d'un traitement avec des programmes de corrélation) mais encore par détection d'activité, ce qui facilite considérablement l'identification des assemblages ; cette donnée d'actibité est d'ailleurs précieuse notamment avant l'expédition de l'assemblage vers un centre de retraitement.

## Revendications

1. Dispositif de localisation de sources (2) de rayonnement, susceptibles de se trouver dans une zone, ce dispositif comprenant une chambre (4) à sténopé, dont les parois forment un blindage vis-à-vis du rayonnement des sources, et des moyens (20) d'obturation de la chambre à sténopé, ces moyens d'obturation étant transparents au rayonnement des sources, dispositif caractérisé en ce qu'il comprend en outre dans la chambre à sténopé, en regard de ce sténopé (16), un écran luminescent (28), transparent dans le domaine lumineux et apte à convertir le rayonnement des sources en un rayonnement lumineux, en ce que les moyens d'obturation sont en outre aptes à empêcher la lumière de la zone d'atteindre l'écran et en ce que le dispositif comprend aussi une caméra (30) qui est optiquement couplée à l'écran et qui est apte à fournir, sous forme de signaux électriques, une image des sources, grâce au rayonnement lumineux qu'elle reçoit de l'écran, et une image de la zone, grâce à la lumière qu'elle reçoit de cette zone à travers l'écran lorsque les moyens d'obturation sont ouverts, la sensibilité de la caméra étant suffisante pour que l'on obtienne une image acceptable des sources, pour une efficacité donnée de l'écran quant à la détection du rayonnement, les images étant superposables et visibles grâce à des moyens (40) de traitement et de visualisation des signaux électriques.

2. Dispositif selon la revendication 1, caractérisé en ce que la caméra (30) est placée dans la chambre à sténopé et comporte une fenêtre d'entrée (32) qui est placée contre l'écran (28).

3. Dispositif selon la revendication 1, caractérisé en ce que la caméra (30) est placée en dehors de la chambre à sténopé et optiquement couplée à l'écran (28) par l'intermédiaire d'un faisceau de fibres optiques (52) dont une extrémité est placée dans la chambre à sténopé, contre l'écran (28).

4. Dispositif selon l'une quelconque des revendications 1 à 3, caractérisé en ce que la chambre à sténopé (4) comporte un collimateur délimité par une paroi en forme de cône dont la partie la plus étroite constitue le sténopé (16).

5. Dispositif selon l'une quelconque des revendications 1 à 3, caractérisé en ce que la chambre à sténopé (4) comporte un collimateur (14) délimité par une paroi en forme de double cône formé de deux cônes de même ouverture, opposés par le sommet, ce dernier constituant le sténopé (16).

6. Dispositif selon l'une quelconque des revendications 1 à 5, caractérisé en ce que le sténopé (16) constitue un double diaphragme, à savoir un petit diaphragme permettant le passage de rayonnements radioactifs et de la lumière et un grand diaphragme permettant seulement le passage des rayonnements radioactifs.

7. Dispositif selon l'une quelconque des revendications 1 à 6, caractérisé en ce que la caméra (30) est une caméra de type à transfert de charges, à double étage d'intensification.

8. Dispositif selon l'une quelconque des revendications 1 à 7, caractérisé en ce qu'il comprend en outre des moyens d'atténuation escamotables (44), ces moyens d'atténuation étant prévus pour atténuer le rayonnement des sources (2) avant que celui-ci n'atteigne l'écran (28).

9. Dispositif selon l'une quelconque des revendications 1 à 8, caractérisé en ce qu'il est porté par un support mobile (58) dont la position est complètement connue à chaque instant et qui permet de prendre des vues complémentaires soit symétriques, soit éloignées ou rapprochées de façon précise et en ce que les moyens de traitement et de visualisation (40) sont prévus pour permettre une vision stéréoscopique, le calcul de la distance des sources (2) par rapport au plan de prise de vues et le calcul de l'intensité du rayonnement au contact des sources.

10. Dispositif selon l'une quelconque des revendications 1 à 8, caractérisé en ce qu'il comprend en outre un télémètre orientable (48), disposé à proximité de la chambre (4) à sténopé et apte à déterminer la distance de chaque source de rayonnement au dispositif.

11. Dispositif selon la revendication 10, caractérisé en ce qu'il comprend une source de lumière orientable, solidaire du télémètre et prévue pour éclairer chaque source de rayonnement dont le télémètre doit mesurer la distance.

12. Dispositif selon les revendications 10 et 11, caractérisé en ce que ledit télémètre comporte un laser jouant simultanément le rôle de source d'éclairage des sources de rayonnement.

13. Dispositif selon l'une quelconque des revendications 1 à 12, caractérisé en ce que le rayonnement des sources est un rayonnement gamma.

## Patentansprüche

1. Gerät zur Lokalisierung von Bestrahlungsquellen (2), welche geeignet sind, sich in einer Zone zu befinden, beinhaltet eine Kammer (4) mit Lochblende, deren Wandungen eine Abschirmung gegenüber der Bestrahlung der Quellen bilden, und Verschlußmittel (20) für die Kammer mit Lochblende, welche für die Bestrahlung der Quellen durchlässig sind,
dadurch **gekennzeichnet,**
daß es außerdem in der Kammer mit Lochblende, bezüglich der Lochblende (16), einen im leuchtenden Bereich durchlässigen und zur Umwandlung der Bestrahlung der Quellen in Lichtstrahlung geeigneten Leuchtschirm (28) umfaßt, daß die Verschlußmittel außerdem geeignet sind zu verhindern, daß das Licht der Zone den Schirm erreicht, und daß ds Gerät auch eine Kamera (30) umfaßt, die optisch mit dem Schirm gekoppelt ist und die dazu geeignet ist, in Form elektrischer Signale aufgrund der Lichtstrahlung, die sie vom Schirm empfängt, ein Bild der Quellen und aufgrund des Lichts, das sie von dieser Zone beim Überstreichen des Schirms erhält, wenn die Verschlußmittel geöffnet sind, ein Bild der Zone zu liefern, wobei die Sensibilität der Kamera außreichend ist, so daß man für eine gegebene Leistung des Schirms, was die Detektion der Strahlung betrifft, ein akzeptables Bild von der Quelle erhält und die Bilder übereinanderlegbar und aufgrund der Mittel (40) zur Verarbeitung und zur Anzeige von elektrischen Signalen sichtbar sind.

2. Gerät gemäß Anspruch 1, dadurch gekennzeichnet, daß die Kamera (30) in der Kammer mit Lochblende angeordnet ist und eine Eingangsöffnung (32) enthält, welche gegenüber dem Schirm (28) angeordnet ist.

3. Gerät gemäß Anspruch 1, dadurch gekennzeichnet, daß die Kamera (30) außerhalb der Kammer mit Lochblende angeordnet ist und durch ein dazwischengeschaltetes Bündel optischer Fasern (52), deren eines Ende in der Kammer mit Lochblende gegenüber dem Schirm (28) angeordnet ist, optisch mit dem Schirm (28) gekoppelt ist.

4. Gerät gemäß einem der Ansprüche 1 bis 3, dadurch gekennzeichnet, daß die Kammer mit Lochblende (4) einen, durch eine Wandung in Form eines Konus begrenzten Kollimator (14) umfaßt, dessen engste Stelle die Locheblende (16) bildet.

5. Gerät gemäß einem der Ansprüche 1 bis 3, dadurch gekennzeichnet, daß die Kammer mit Lochblende (4) einen Kollimator (14) umfaßt, der durch eine Wandung in Form eines Doppelkonus begrenzt wird, welcher aus zwei Konen derselben Öffnung gebildet wird, die im Scheitelpunkt gegenübergesetzt sind, wobei letzterer die Lochblende (16) bildet.

6. Gerät gemäß einem der Ansprüche 1 bis 5, dadurch gekennzeichnet, daß die Lochblende (16) ein Doppeldiaphragma bildet, nämlich ein kleines Diaphragma, welches den Durchtritt von radioaktiver Strahlung und von Licht erlaubt, und ein großes Diaphragma, welches nur den Durchtritt von radioaktiver Strahlung erlaubt.

7. Gerät gemäß einem der Ansprüche 1 bis 6, dadurch gekennzeichnet, daß die Kamera (30) eine Kamera vom Typ der Ladungsübertragung mit doppelter Verstärkerstufe ist.

8. Gerät gemäß einem der Ansprüche 1 bis 7, dadurch gekennzeichnet, daß es außerdem einziehbare Dämpfungsmittel (44) umfaßt, welche vorgesehen sind zur Dämpfung der Strahlung der Quellen (2), bevor diese auf den Schirm (28) treffen.

9. Gerät gemäß einem der Ansprüche 1 bis 8, dadurch gekennzeichnet, daß es von einer mobilen Stütze (58) getragen wird, deren Position zu jedem Zeitpunkt vollständig bekannt ist und die es erlaubt, sowohl symmetrische, als auch vergrößerte oder in präziser Weise nähergebrachte Ergänzungsansichten aufzunehmen und daß die Mittel zur Verarbeitung und Anzeige (40) dazu vorgesehen sind, um eine stereokope Ansicht zu erlauben, die Berechnung des Abstands der Quellen (2) bezüglich der Aufnahmeebene und die Berechnung der Strahlungsintensität im Kontakt der Quellen.

10. Gerät gemäß einem der Ansprüche 1 bis 8, dadurch gekennzeichnet, daß es außerdem einen einstellbaren Abstandmesser (48) umfaßt, welcher in der Nähe der Kammer (4) mit Lochblende angebracht ist und dazu dient, den Abstand jeder Strahlungsquelle vom Gerät zu bestimmen.

11. Gerät gemäß dem Anspruch 10, dadurch gekennzeichnet, daß es eine einstellbare Lichtquelle umfaßt, welche mit dem Abstandsmesser verbunden und dazu vorgesehen ist, jede Strahlungsquelle, deren Entfernung der Abstandsmesser messen muß, zu beleuchten.

12. Gerät gemäß den Ansprüchen 10 und 11, dadurch gekennzeichnet, daß besagter Abstandsmesser eine Laser umfasst, welcher gleichzeitig die Rolle der Quelle zur Beleuchtung der Strahlungsquellen spielt.

13. Gerät gemäß einem der Ansprüche 1 bis 12, dadurch gekennzeichnet, daß die Strahlung der Quellen Gammmastrahlung ist.

## Claims

1. Device for the localization of radiation sources (2) liable to be found in a given area, said device comprising a pinhole chamber (4) whose walls form a shield against the radiation emanating from said source, and means (20) for shuttering said pinhole chamber, said shuttering means being transparent to the radiation from said sources, characterized in that in said pinhole chamber and opposite said pinhole (16) a luminescent screen (28) which is transparent in the luminous range and which is capable of converting the radiation from said sources into luminous radiation, said shuttering means being, in addition, capable of preventing the light from said area from reaching said screen, said device also comprising a camera (30) connected optically to said screen and capable of providing, in the form of electric signals, an image of said sources by means of the luminous radiation which said camera receives from said screen, and an image of said area by means of the light which said camera receives from said area through said screen when said shuttering means are open, the sensitivity of said camera being sufficient to ensure that an acceptable image of said sources will be obtained for a given radiation-detection efficiency of said screen, said images being capable of superposition and being visible through the use of means (40) for the processing and display of said electric signals.

2. Device according to claim 1, characterized in that said camera (30) is positioned in said pinhole chamber and comprises an entry aperture (32) positioned against said screen (28).

3. Device according to claim 1, characterized in that said camera (30) is placed outside of said pinhole chamber and is connected optically to said screen (28) by means of a bundle of optical fibres (52), one end of which is placed in said pinhole chamber against said screen (28).

4. Device according to any one of the claims 1 to 3, characterized in that said pinhole chamber (4) comprises a collimator bounded by a cone-shaped wall whose narrowest part constitutes said pinhole (16).

5. Device according to any one of the claims 1 to 3, characterized in that said pinhole chamber (4) comprises a collimator (14) bounded by a wall formed from a double cone composed of two cones having the same opening dimension and whose tips are set opposite one another, said tips constituting said pinhole (16).

6. Device according to any one of the claims 1 to 5, characterized in that said pinhole (16) constitutes a double diaphragm, i.e. a small diaphragm allowing the passage of radioactive radiation and of light, and a large diaphragm allowing only the passage of radioactive radiation.

7. Device according to any one of the claims 1 to 6, characterized in that said camera (30) is a charge coupled type camera having two-stage intensification.

8. Device according to any one of the claims 1 to 7, characterized in that it also comprises retractable attenuation means, said attenuation means being furnished to attenuate the radiation emanating from said sources (2) before it reaches said screen (28).

9. Device according to any one of the claims 1 to 8, characterized in that said device is carried by a movable support (58) whose position is known fully at each instant and which makes it possible to take complementary photographs which are either symmetrical or are taken from precisely-determined, distant or close-up positions, and in that said processing and display means (40) are provided to make possible stereoscopic views, the calculation of the distance from said sources (2) in relation to the photographic plane, and the calculation of the intensity of the radiation in contact with said sources.

10. Device according to any one of the claims 1 to 8, characterized in that it also comprises an adjustable range finder (48) positioned in proximity to said pinhole chamber (4) and capable of determining the distance from each of said radiation sources to said device.

11. Device according to claim 10, characterized in that it also comprises an adjustable light source unitary with said range finder and furnished to illuminate each of said radiation sources, the distance between which and said device is to be measured by said range finder.

12. Device according to either of the claims 10 and 11, characterized in that said range finder comprises a laser acting simultaneously as the source of illumination of said radiation sources.

13. Device according to any one of the claims 1 to 12, characterized in that said radiation emanating from said sources is gamma radiation.
